# EUROPEAN PATENT SPECIFICATION

(11) **EP 0 984 869 B1**
(45) Date of publication and mention of the grant of the patent: **06.03.2002**
(21) Application number: 98924858.8
(22) Date of filing: 22.05.1998
(51) Int. Cl.: B60C 17/00, B60C 9/20, B60C 9/22, B60C 9/18, B60C 11/00

(54) **RUNFLAT TIRE WITH IMPROVED UNINFLATED HANDLING**
NOTLAUFREIFEN MIT VERBESSERTEM PLATTLAUFVERHALTEN
PNEUMATIQUE POUVANT ROULER A PLAT AVEC TENUE AMELIOREE A L'ETAT NON GONFLE

(30) Priority: 29.05.1997 US 865448; 29.05.1997 US 865489; 29.05.1997 US 865490; 13.03.1998 US 5189 P
(43) Date of publication of application: 15.03.2000
(73) Proprietor: THE GOODYEAR TIRE & RUBBER COMPANY, Akron, Ohio 44316-0001 (US)
(72) Inventor: PAONESSA, Anthony, Curtis, Akron, OH 44312 (US); SELOOVER, Mark, Henry, Clinton, OH 44216 (US); ROWEDER, Steven, Craig, Uniontown, OH 44685 (US); ALLEN, Walter, Dale, Cuyahoga Falls, OH 44223 (US); BECK, John, Janes, Jr., Lawton, OK 73505 (US)
(74) Representative: Leitz, Paul
(86) International application number: US9810550
(87) International publication number: WO9854014

(56) References cited:
- EP-A- 0 605 177
- EP-A- 0 729 853
- WO-A-97/01452
- FR-A- 2 287 350
- FR-A- 2 425 334
- FR-A- 2 460 218
- US-A- 4 111 249

## Description

### Technical Field

This invention relates to a tire; more particularly to a pneumatic tire capable of being used in the uninflated condition.

### Background Art

Various tire constructions have been suggested for pneumatic runflat tires, that is, tires capable of being used in the uninflated condition. One approach described in US-A- 4,111,249 entitled "Banded Tires" was to provide a hoop or annular band directed under and approximately as wide as the tread. The hoop in combination with the rest of the tire structure could support the vehicle weight in the uninflated condition. This banded tire actually tensioned the ply cords even in the uninflated condition. Another Patent, US-A- 5,685,927, combined the use of sidewall inserts in combination with an annular bead placed directly under the tread. In this approach, the sidewall inserts were assisted in load carrying capacity by the addition of this tread bead. The resultant tire was able to carry more load with less sidewall material.
Unfortunately, the hoop or beads under the tread created additional rolling resistance problems and presented a much stiffer tread area which could inhibit ride performance.

EP-A- 590 482 corresponds to the preamble of claim 1 and discloses a radial ply tire having fillers stiffening the sidewalls to permit the tire to be driven while uninflated. The tire may further include an overlay radially outwardly of the reinforcing belts.

In a 1998 article entitled "Self-Supporting Tire Performance Criteria in Testing" the author Walter Lee Willard, Jr. of Michelin America Research and Development Corporation, reported to the Society of Automotive Engineers, Inc. a rather comprehensive study of self-supporting tires. He reported that self-supporting tires share the same basic design objectives: minimize the differences relative to conventional tires (inflated), enhance low pressure handling capability, acceptable zero kPa handling on suitable vehicles, enhance low pressure and zero kPa bead retention; and provide sufficient zero kPa durability to avoid a less than ideal roadside situation.

It is applicants' belief that the ideal self-supporting or runflat tire is one that can operate at zero kPa indefinitely and this theoretical tire should provide the same ride performance and handling characteristics of the pneumatic tire. Having set that, as a design goal, current technology falls far short in several areas, however, it is improving rapidly. In order to approach the theoretical goal, applicants have discovered several unique relationship with regard to runflat tires, and in discovering these relationships, they have developed several embodiments that have improved characteristics and are a great step forward in the achievement of the theoretical runflat tire.

### Summary of the Invention

The invention provides a pneumatic runflat tire as defined in the claims.

### Definitions

"Aspect Ratio" means the ratio of its section height to its section width.

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers, the bead or beads under the tread being encapsulated in tread rubber can be with or without other cord reinforced fabric elements.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Circumferential" means lines or directions extending along the perimeter of the surface of the annular tread perpendicular to the axial direction.

"Carcass" means the tire structure apart from the belt structure, tread, undertread, and sidewall rubber over the plies, but including the beads.

"Casing" means the carcass, belt structure, beads, sidewalls and all other components of the tire excepting the tread and undertread.

"Chafers" refers to narrow strips of material placed around the outside of the bead to protect cord plies from the rim, distribute flexing above the rim.

"Cord" means one of the reinforcement strands of which the plies in the tire are comprised.

"Equatorial Plane (EP)" means the plane perpendicular to the tire's axis of rotation and passing through the center of its tread.

"Footprint" means the contact patch or area of contact of the tire tread with a flat surface at zero speed and under normal load and pressure.

"Innerliner" means the layer or layers of elastomer or other material that form the inside surface of a tubeless tire and that contain the inflating fluid within the tire.

"Normal Inflation Pressure" means the specific design inflation pressure and load assigned by the appropriate standards organization for the service condition for the tire.

"Normal Load" means the specific design inflation pressure and load assigned by the appropriate standards organization for the service condition for the tire.

"Normal Vehicle Load" means the estimated load for a given tire at a predetermined vehicle specified pressure. For this application, all testing was conducted at 900 lbs. load at 30 psi, 0 psi unless otherwise indicated for a 215/65R15 sized tire.

"Ply" means a continuous layer of rubber-coated parallel cords.

"Radial" and "radially" mean directions radially toward or away from the axis of rotation of the tire.

"Radial Ply Tire" means a belted or circumferentially-restricted pneumatic tire in which the ply cords which extend from bead to bead are laid at cord angles between 65° and 90° with respect to the equatorial plane of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tread Width" means the arc length of the tread surface in the axial direction, that is, in a plane parallel to the axis of rotation of the tire.

### Brief Description of Drawings

The structure, operation, and advantages of the invention will become further apparent upon consideration of the following description taken in conjunction with the accompanying drawings, wherein:
FIGURE 1 is a cross-sectional view of a prior art runflat tire 10 incorporating runflat insert-reinforced sidewalls;
FIGURE 2A is a fragmentary cross-sectional schematic view of the ground-contacting portion of the prior art runflat tire 10 of FIGURE 1 in normally inflated condition;
FIGURE 2B is a fragmentary cross-sectional schematic view of the ground-contacting portion of the prior art runflat tire 10 of FIGURE 1 in an uninflated condition;
FIGURE 2C is an enlarged fragmentary schematic view of the upward-buckled central portion of the uninflated prior art tire shown in FIGURE 2B;
FIGURE 3A is a cross-sectional view of an exemplary runflat tire 1 not belonging to the invention. The tire 1 being shown in the normally inflated mounted on its design rim 100 but unloaded condition.
FIGURE 3B is the tire 1 of FIGURE 3A shown when inflated normally 630 psi (2 bars) and normally vehicle loaded.
FIGURE 3C is the tire 1 of FIGURE 3A shown uninflated and normally vehicle loaded. The cross-section being taken along the leading edge 54 of the contact patch 55.
FIGURE 4A is a schematic representation of the normally vehicle loaded and inflated dynamic contact patch of a exemplary tread for a runflat tire.
FIGURE 4B is a schematic representation of a normally vehicle loaded and uninflated dynamic contact patch of the tire of FIGURE 4A using a prior art construction.
FIGURE 4C representation is a schematic of a dynamic contact patch 55 of the exemplary tread of the tires 4 or 5 according to the invention under normal vehicle load and 30 psi (0,2 MPa) inflation.
FIGURE 4D is the schematic dynamic contact patch 55 of the tire of FIGURE 4C when constructed in an aspect ratio of less 50% only uninflated and normally vehicle loaded.
FIGURE 4E is he schematic dynamic contact patch 55 of the tire of FIGURE 4C constructed with an aspect ratio of 65% when uninflated and normally loaded.
FIGURE 5 is a cross-sectional view of a first embodiment tire 4 having three or more annular resilient bands 29.
FIGURE 6 is a second embodiment tire 5 having a helically wound coil 60 located between the belt reinforcing structure and the carcass.

### Detailed Description

### Prior Art Embodiment

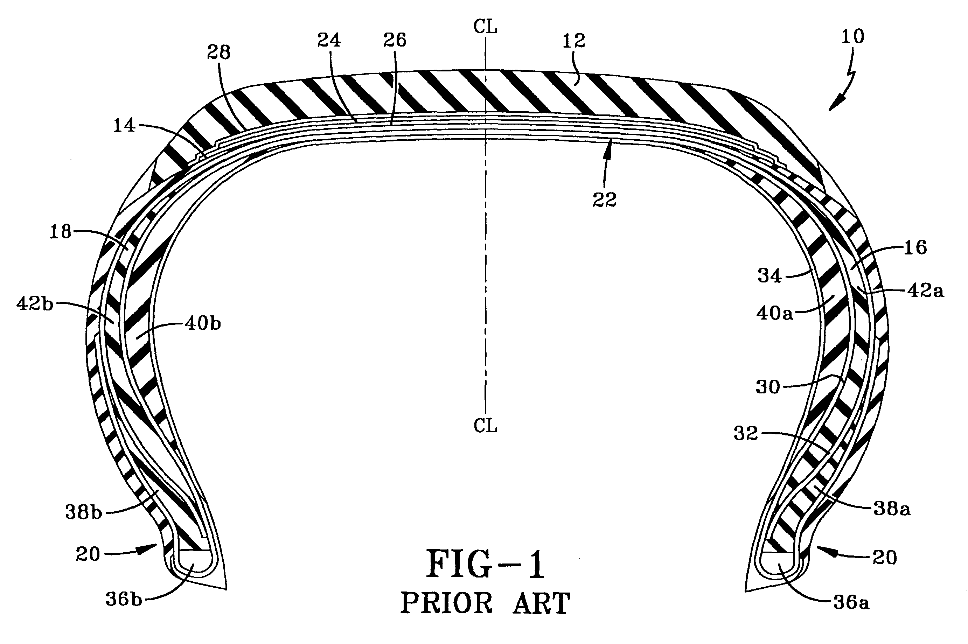

With reference to FIGURE 1, a cross-section of a typical prior art low-profile pneumatic radial runflat tire 10 is illustrated. The tire 10 has a tread 12, a belt structure 14, a pair of sidewall portions 16, 18, a pair of bead regions 20 and a carcass structure 22. Belt structure 14 consists of two belts 24, 26 and a fabric overlay 28 deployed between the bottom portion of tread 12 and the upper parts of the belt structure. The carcass 22 includes a first ply 30 and a second ply 32, a gas-impervious inner liner 34, a pair of beads 36a, 36b, a pair of bead filler apexes 38a, 38b, a first pair of inserts 40a, 40b, and a second pair of inserts 42a, 42b. The first or innermost insert 40a, 40b is located between the innerliner 34 and the first ply 30 and second ply 32. Fabric overlay 2 is disposed beneath, or radially inward of, tread 12 and on top of, or radially outward from, belt structure 14. The reinforced sidewall portions 16, 18 of carcass structure 22 give the tire 10 a limited runflat capability.

As can be seen from FIGURE 1, the structural reinforcement in the sidewall area of the tire 10 substantially increases the overall thickness of the sidewall portions 16, 18. This generalized prior art runflat tire design shows the more or less uniformly thickened sidewalls that characterize runflat tire designs. Such insert-reinforced sidewalls are necessary to support the tire's load with minimal sidewall deformation when the tire 10 is in an uninflated state. Such runflat tire designs provide reasonable vehicle handling and performance under conditions of full inflation, and they yield reasonable runflat tire life and vehicle handling when the tire is uninflated. Runflat tires generally weigh more than equivalent non-runflat-capable tires, because of the additional weight of the reinforcement material in the sidewalls; this additional weight is greater in high-profile runflat tires than in low-profile runflat tires.

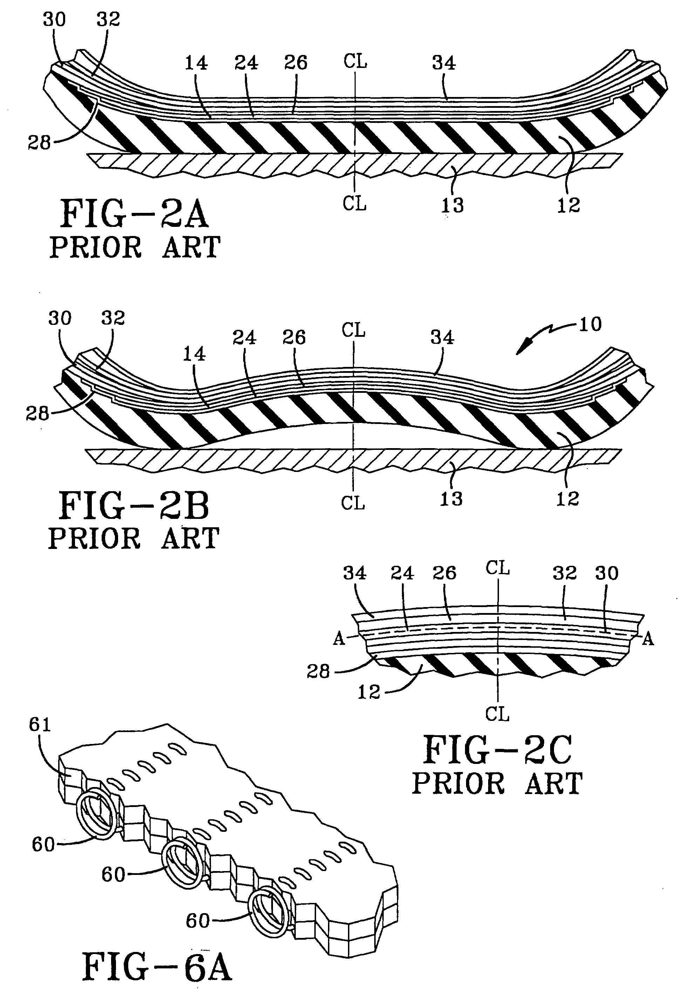

FIGURE 2A shows a fragmentary schematic of a normally inflated prior art tire with its tread 12 in contact with the ground 13. The flattening of the tread 12, in the region where it contacts the ground 13, induces bending stresses in the tread and its underlying components, including belt structure 14, overlay fabric 28, belts 24, 26, radial plies 30, 32, and inner liner 34. More specifically, the bending stresses derive from the flattening of the tread 12 from the as-molded or the as-inflated lateral curvature of tread and its underlying structures. These bending stresses induce tensile stresses in the radially inward structures beneath tread 12, such as the innerliner 34 and the radial plies 30, 32. Corresponding compressive stresses are induced in the elastomeric material of tread 12 and such underlying structures as the fabric overlay 28 and portions of the belt structure 14.

FIGURE 2B illustrates the upward buckling of tread 12 of the uninflated prior art runflat tire 10 in the region where the load-bearing tread contacts the flat road surface 13. The upward buckling of the central tread region corresponds to the formation of bending stresses in the central portions of tread 12 and its underlying structures. The bending stresses in the tread 12 during runflat operation, as illustrated in FIGURE 2B, are greater than those associated with simple flattening of the tread during normal-inflated operation, as illustrated in FIGURE 2A.

FIGURE 2C is a fragmentary schematic detail (not in exact proportion) of the belts 24, 26, plies 30, 32, innerliner 34 and fabric overlay 28 as they would appear within the upward-buckled central portion of the tread 12 of the prior art tire. The neutral bending axis A-A shown in FIGURE 2C is shown located in a plausible relationship with respect to the fabric overlay 28, belts 24, 26, plies 30, 32 and innerliner 34. Those skilled in the art will appreciate that, in FIGURE 2C, the structural elements of tread 12 which lie above the neutral axis A-A -- i.e., radially inward of the tread 12 -- will experience tensile loading, while those structures located below the neutral axis A-A, i.e., closer to tread 12, will experience compressive loading. The location of neutral axis A-A in relation to belts 24, 26 is approximate, taking into account the tensile-stress-bearing capabilities of radial plies 30, 32 and the compressive-stress-bearing structure, nor is the innerliner 34 an effective tensile-load-bearing structure. The neutral axis A-A is shown to be located within belt 24 purely as an approximation of where it would lie given the relative greater modulus of elasticity of the steel cords in belts 24, 26 compared to the modulus of the cords that reinforce the plies 30, 32. It is recognized that greater or lesser degrees of upward buckling of the central portions of the tread 12, as illustrated in FIGURES 2B and 2C, plausibly will cause the location to the neutral bending axis A-A to change correspondingly with regard to the tire's radial direction.

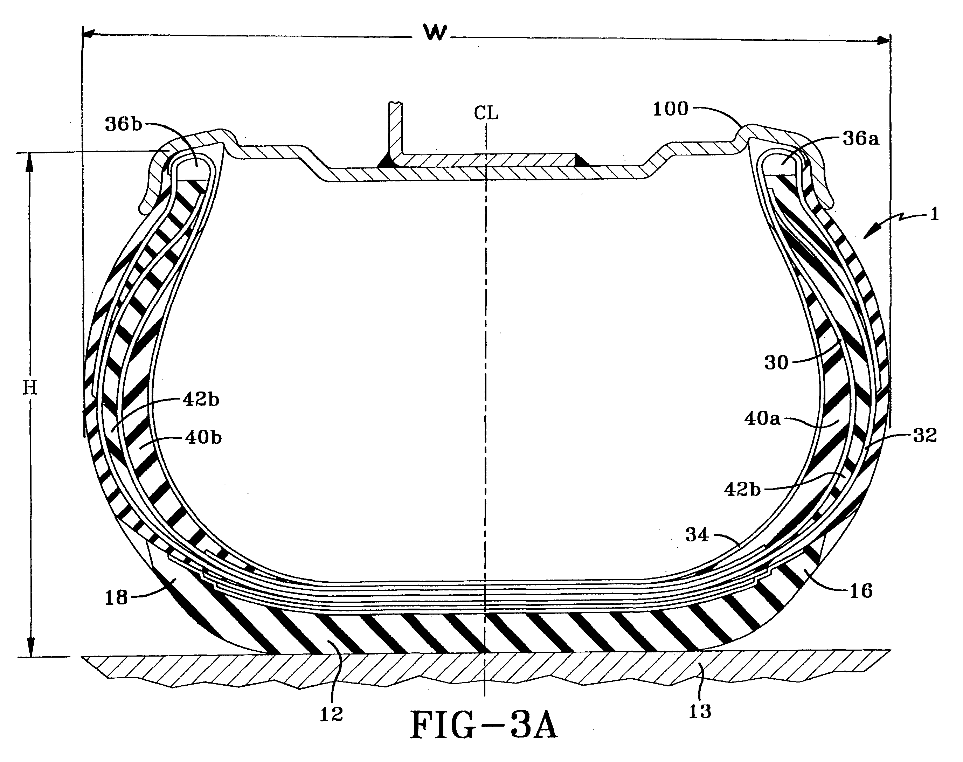

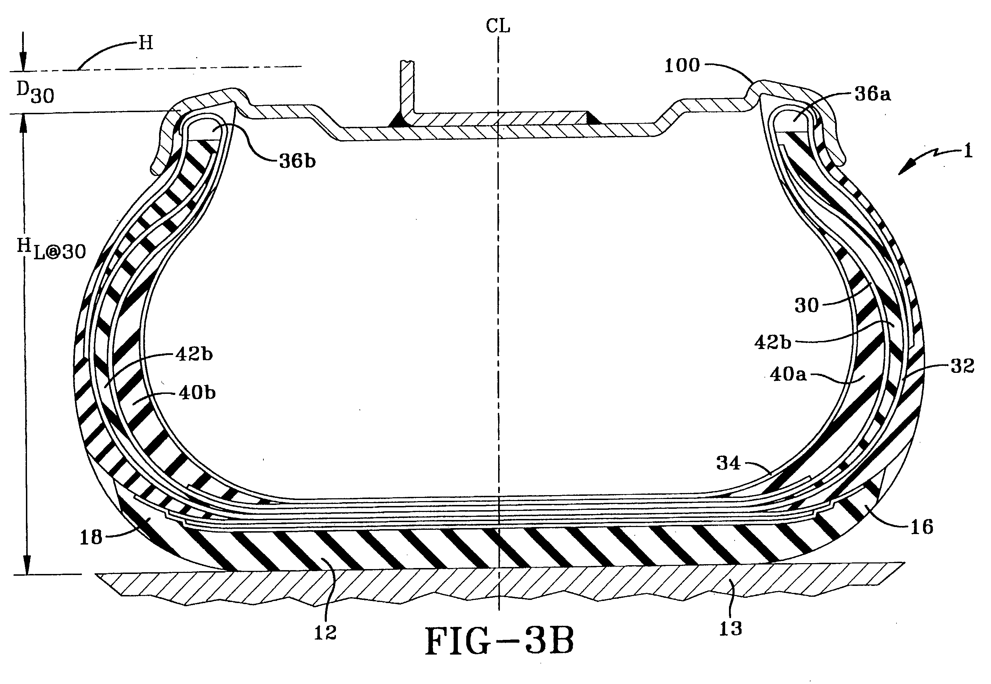

As shown in FIGURES 3A through 3C, tire 1 being illustrated, it being noted that all the various tires 1, 4 or 5 have a similar unique deflection profile that is related to the sidewall 16, 18 stiffening working in combination with the tread 12 and its underlying composite reinforcements. In FIGURE 3A, a normally inflated exemplary runflat tire 1 is shown in the unloaded condition. The tire exemplary has an undeflected section height at "H" as shown in the figure. As shown in FIGURE 3A, when the tire 1 is at its normal inflation of say 30 PSI (0,2 MPa) and loaded to a normal vehicle load of approximately 4,000 Newton, the tire will exhibit a deflection D₃₀ as measured from the unloaded section height H, the deflection D₃₀ being less than 20 mm. As further shown in FIGURE 3C, the tire 1 when uninflated and loaded to 4,000 Newton exhibits a deflection D₀ of less than 40 mm. These representative deflections were for a test tire of a size P215/65R15 wherein the load of 4,000 Newton is the typical normal vehicle load. It is believed that as the tire sizes change and the normal vehicle load correspondingly is changed for various tire constructions that this relationship of deflection D₀, D₃₀ should be maintained. As will be appreciated by those of ordinary skill and tire art, the deflection of the normally inflated and loaded tire D₃₀ is relatively a small amount of deflection from the inflated but unloaded tire. By subtracting the normally inflated deflection D₃₀, from the total deflection D₀ of the uninflated tire, one finds that this difference (D₀-D₃₀) or Δ deflection is substantially equal to or less than the normally loaded and inflated deflection D₃₀. What this means to those of ordinary skill in the art is that the tire section height does not substantially deviate from the inflated H_{L@30} to the uninflated condition H_{L@0}. This minimal deflection (D₀ - D₃₀) difference greatly reduces the amount of instability created when one of the tires is run in the uninflated condition. This is particularly noticeably when the tire has a high section height H or is a high aspect ratio tire of greater than 50%, more typical 60% or greater, as is common in mini-vans and sport utility vehicles. The tires generally have a section height of 4 inches (10 cm) or greater.

As was reported in US-A-5,685,927 the spring rate of the tire in the inflated condition should not change appreciably from that of a conventional non-runflat pneumatic tire. When the runflat tire was operated in the uninflated state, the spring rate must be sufficient to prevent the tire from buckling or collapsing onto itself. The prior art tire of US-A-4,111,249 with the resilient band had a spring rate approximately one-half the inflated tire spring rate. Otherwise, a severe thumping problem could be evidenced. In US-A-5,685,927 the tire having a third bead core under the tread, it was determined that the overall spring rate should be in a range of 30 percent to 50 percent of that of the inflated tire. This condition insured that for a given load, the tire would only deflect about 2 to 3 times that of the inflated tire. This increase in deflection reportedly created no significant handling problems at routine highway speeds. While that was true for the three-bead tire, it should be noted that the tire was tested as a P275/40ZR18 high performance runflat tire having an inflated spring rate of approximately 2,000 pounds per inch (3,5•10⁵ N/m) and in the uninflated conditions the spring rate was 806 pounds per inch (1,4 • 10⁵ N/m) . That prior art tire having a very low section height was reasonably stable under those large uninflated deflections. Furthermore, the vehicle was a Corvette which had a compensating suspension system further improving the handling capability of the car when one tire was uninflated.

In the case where these higher aspect ratio tires are developed to run in the uninflated condition, deflections of such a large magnitude and changes in spring rate from the inflated to the uninflated condition dramatically can effect the handling characteristics of the vehicle. It is, therefore, considered prudent to attempt to develop the runflat tire such that variations from the inflated to the uninflated conditions are kept to a minimum.

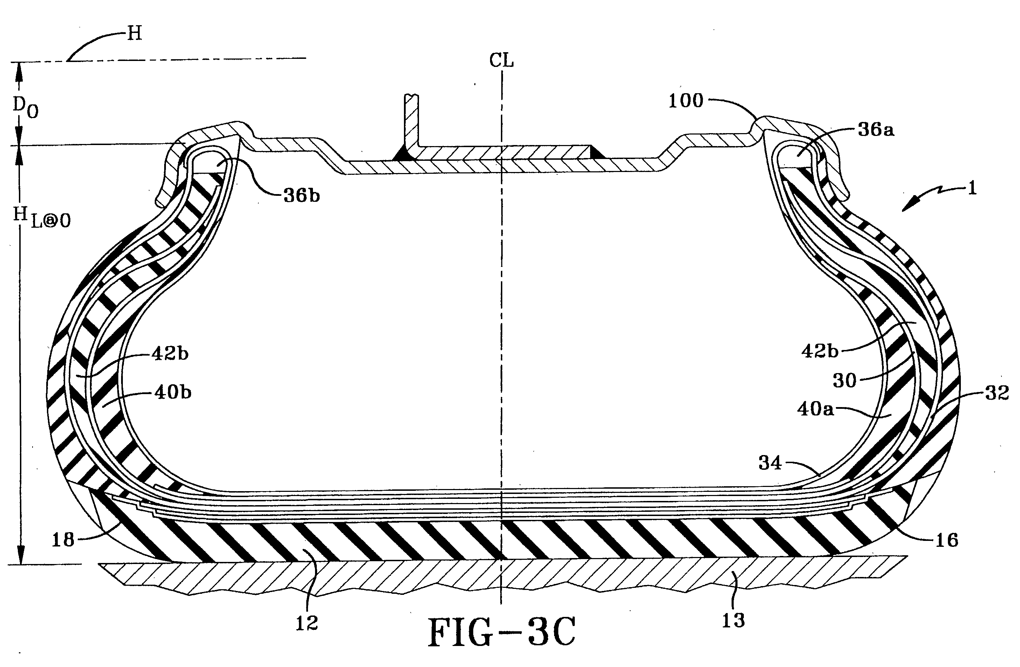

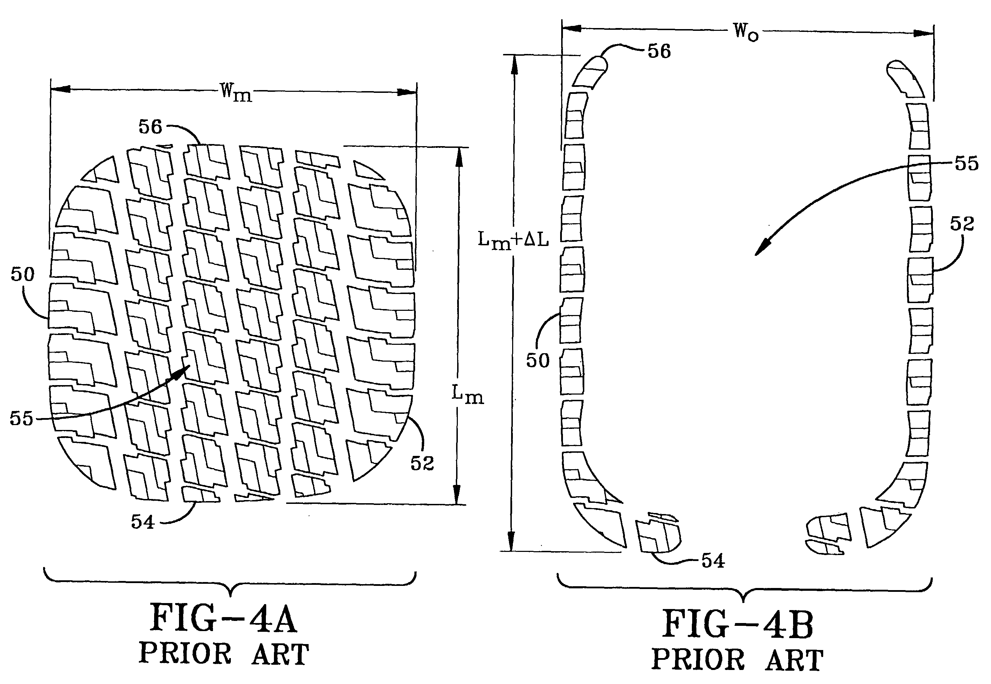

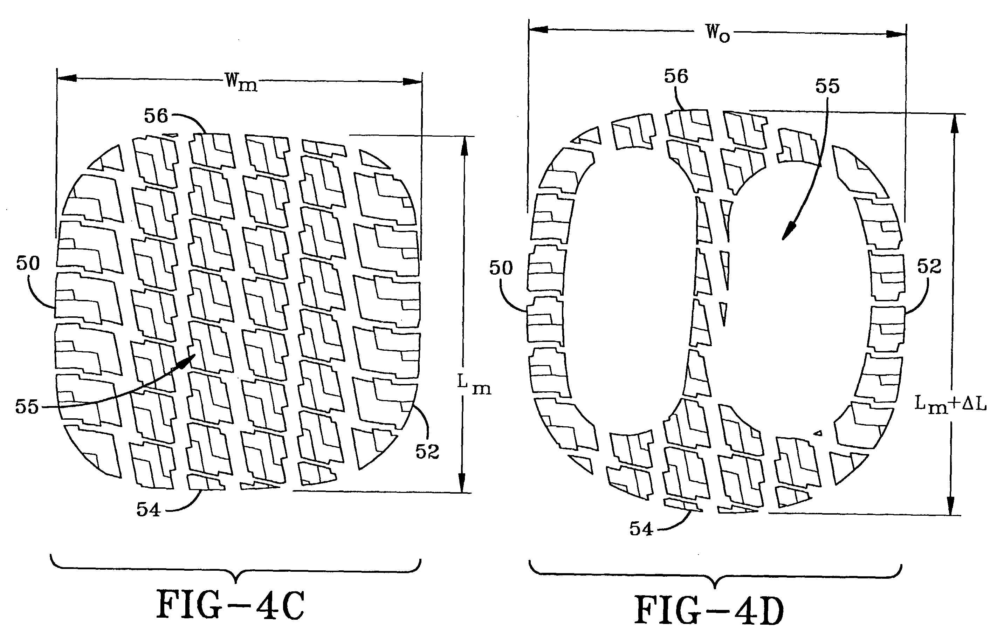

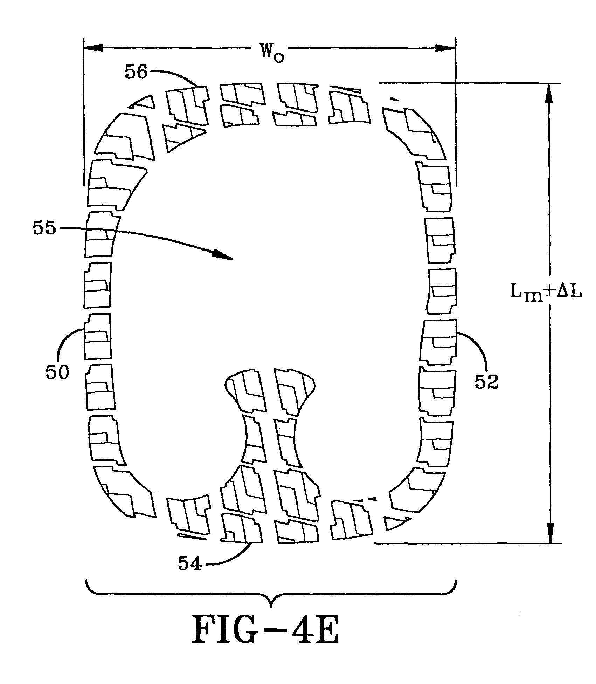

As can be seen from FIGURES 4A, B, C, D and E, these variations in deflections also effected the tire's contact patch 55 otherwise known as the footprint area. The prior art runflat tires 10 having a higher deflection under the normal vehicle loaded and uninflated conditions exhibited by a lengthening of the tire's contact patch as the tire 10 is uninflated and placed under normal load when compared to the normally vehicle loaded and inflated contact patch of FIGURE 4A. Additionally and most importantly this can be observed from FIGURE 4B when compared to the contact patch 4A of the normally inflated and normally loaded prior art tire 10. It can be readily appreciated that only the shoulder areas 50, 52 maintain tread element contact creating two contact zones that are substantially not connected. The tread elements in the center region of the tread 12 from leading edge 54 to trailing edge 56 are generally non-contacting. This evidences a severe buckling in the tread region of the runflat tires 10 of the prior art. In FIGURES 4C, the contact patch of the tires 4, or 5 according to the present invention exhibit a relatively rectangular cross-sectional shape in the normally vehicle loaded and 30 psi (0,2 MPa) inflated condition. When the tire according to the invention is uninflated and normally vehicle loaded as in FIGURE 4D, the tread elements maintain contact around the parimeter of the footprint along at least the leading edge 54 and the two shoulder regions 50, 52. When the tire is uninflated and loaded to the maximum gross vehicle load, a further deflection occurs but the tread contact patch 55, while becoming longer in the circumferential direction, maintains this parimeter contact around the footprint as shown in FIGURE 4E. Therefore, tread element contact is maintained across at least the leading edge 54 and in some cases across the trailing edge 56 of the contact patch on footprint 55. The parimeter contact was at a minimal "U" shaped, and in many cases rectangular, creating a good cornering capability tire at zero psi. These footprints had their dynamic contact patch 55 representations taken at approximately 4 km per hour. At these relatively low speeds, this exaggerates the buckling of the tread 12 in the center region in the uninflated condition. As the tire increases its speed and velocity, the buckling of the center elements is dramatically reduced. Therefore, at higher speeds, more of the tread will be in contact. However, by testing the tire at such a slow speed an exaggerated statement of the non-contact area, can be created. While the optimum condition would be to have the tread elements in the uninflated condition maintain the same contact area as the inflated condition, it can easily be appreciated that the lack of air within the tire's chamber requires that the composite reinforcing structure beneath the tread 12 and the tread 12 work in combination to create contact areas. It is significant that the leading edge 54, and in some cases, some or all of the trailing edge 56 of the tread elements maintain their contact with the road. This effectively evidences that the composite structures radially inward from the tread 12 is working to resist buckling. This is believed to significantly improve the cornering coefficient capability of the tires 4 or 5 when driven in the uninflated condition.

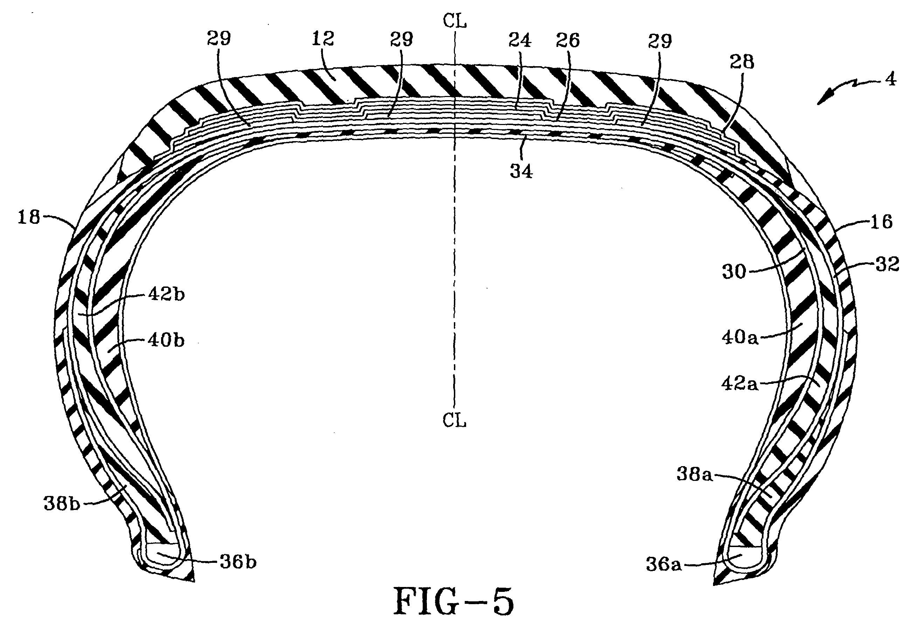

With regard to FIGURE 5 a tire 4 is shown having three or more resilient bands 29 spaced radially inward and directly under the belt reinforcing layers 24, 26. The bands 29 are positioned in an array laterally across the tread and interposed between the belt reinforcing structure 24, 25 and the carcass ply 30, 32. The array of bands 29 have an axial width of at least 80 percent of the tread width. It is believed preferable that the bands be of a composite material, any composite material may be used, however, it is believed glass polyamide or carbon fiber are preferable. Each band 29 preferably should be extremely thin and result in minimum hoop distortion in the uninflated condition. Hoop distortion is a phenomenon that occurs with bands such that as the band rolls through the footprint, its deformation from circular to flat creates unusual rolling resistance increases. In order to avoid this phenomenon, it is important that the bands be sufficiently narrow and act independently of each other. Furthermore, it is believed essential that the bands be covered by at least the fabric overlay 28 or a belt reinforcing structure 24, 26.

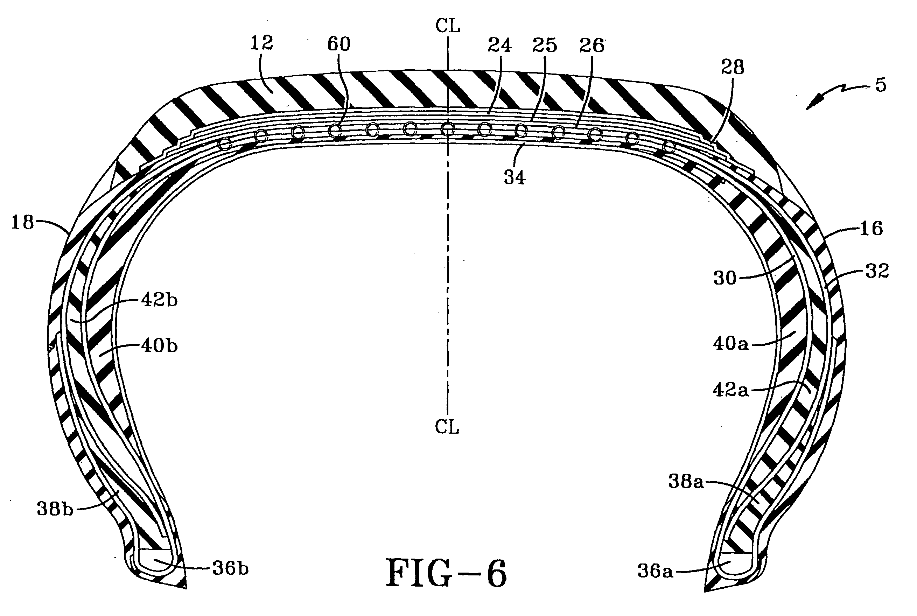

In FIGURE 6, a runflat tire 5 is shown wherein one or more helically wound coils 60 extends axially across the radially inner belt reinforcing structure 14. As shown, the helically wound coils are interposed between the belt reinforcing structure 14 and the carcass ply 30, 32. As further illustrated, in FIGURE 6A the helically wound coils 60 are encapsulated in the elastomeric material 61. Each coil 60 provides a stiffening in the circumferential direction and helps provide for the uninflated runflat condition while simultaneously being of a spring-like nature. These coils as the tire enters and leaves the footprint, provide minimal rolling resistance with exceptional tread stiffening capability.

## Claims

1. A pneumatic runflat tire (4, 5) having a radially outer tread (12), a belt reinforcing structure (24, 26) radially inward of the tread, the belt reinforcing structure having at least two cord reinforced layers (24,26), and a carcass reinforcing structure including at least one cord reinforced ply (30,32) extending to a pair of annular bead cores (36a,36b), the tire when mounted on a design rim and normally inflated but unloaded has a section height H and a section width W, wherein the section width W is greater than the section height H, the tire having a section height H being greater than 4 inches (10 cm) and the ratio of the section height to section width H/W defining the aspect ratio of the tire, the aspect ratio being greater than 50%; a pair of sidewalls (16,18) extending from the tread (12) radially inward toward the bead cores, each sidewall (16,18) having at least one elastomeric insert (40a,40b,42a,42b) radially inward of a ply (30,32),
**characterized in that** by a combination of the tread (12), the belt reinforcing structure (24,26) and the at least one cord reinforced ply (30,32) and one or more tread stiffening members selected from a group of one or more of the following:
- (a) at least three or more annular bands (29) positioned in an array laterally across the tire interposed between the belt reinforcing structure (24,26) and the carcass ply (30,32), the array of bands (29) having an axial width at least 70 percent of the tread width; or
- (b) a helically wound coil (60) extending axially across and radially inward of the belt reinforcing structure (24,26);
the normally inflated 30 PSI (0,2 MPa) deflection D₃₀ of the tire (4,5) under normal load is less than 20 mm and the 0 PSI (0 MPa) deflection D₀ under normal load is less than 40 mm and the difference between the normally loaded and inflated deflection D₃₀ and the D₀ deflection is substantially equal to or less than the amount of deflection D₃₀.

2. The tire of claim 1 wherein the bands (29) are of a composite material, such as glass polyamide or carbon fiber.

3. The tire of claim 1 wherein the array of bands (29) has an axial width at least 80 percent of the tread width.

4. The tire of claim 1 wherein the belt reinforcing structure has three belt layers (24,25,26), each belt layer (24,25,26) having parallel cords oriented annularly relative to the equatorial plane of the tire in the range of 18° to 30° each adjacent layer (24, 25, 26) being oppositely inclined.

5. The tire of claim 4 wherein each adjacent belt layer (24,25,26) has cords angles equal but oppositely inclined.

6. The tire of claim 4 wherein the cords of one or more belt layers (24,25,26) are steel and have a diameter of 0.035 inch (0,09 cm) and a 2+2 construction.

7. The tire of claim 4 wherein the cords of one or more belt layers (24,25,26) are steel having a 0.056 inch (0,14 cm) cord diameter.

8. The tire of claim 1 wherein the helically wound coils (60) are encapsulated in an elastomeric material (61).

9. The tire of claim 1 wherein the apex (38a,38b) extends about 2,5 inches (6.4 cm) above the bead core.

10. The tire of claim 1 which when mounted on a design rim has a dynamic tread contact patch at 4 km/h with
a substantially rectangular shape having a width Wₘ and an average circumferential length L_{N} as measured between a leading edge and a trailing edge when under normal vehicle load and normal inflation and a length Lₙ+ΔL and a width Wₙ, when under normal vehicle load and zero inflation pressure defining the parameter shape of the contact patch wherein the leading edge maintains tread element contact in the range of the inflation pressures from 0 PSI (0 MPa) to normal inflation pressure, wherein the ratio of the contact patch length Lₙ+ΔL at 0 PSI (0 MPa) to the length L_{N} is 225 percent or less.

11. The tire of claim 10 having a net contact area when normally loaded and inflated that is less than 150 percent of the normally loaded and zero PSI (0 MPa) net contact area.

## Patentansprüche

1. Notlauf-Luftreifen (4, 5) mit einem radial äußeren Laufstreifen (12), einem Gürtelverstärkungsaufbau (24, 26) radial innen in bezug auf den Laufstreifen, wobei der Gürtelverstärkungsaufbau mindestens zwei mit Kord verstärkte Schichten (24, 26) aufweist, und einem Karkassverstärkungsaufbau, der mindestens eine mit Kord verstärkte Lage (30, 32) aufweist, die sich zu zwei ringförmigen Wulstkernen (36a, 36b) erstreckt, wobei der Reifen, wenn er auf eine Konstruktionsfelge aufgezogen und normal aufgepumpt aber unbelastet ist, eine Querschnittshöhe H und eine Querschnittsbreite W aufweist, wobei die Querschnittsbreite W größer als die Querschnittshöhe H ist, wobei der Reifen eine Querschnittshöhe H aufweist, die größer als 4 Zoll (10 cm) ist, und das Verhältnis der Querschnittshöhe zur Querschnittsbreite H/W das Aspektverhältnis des Reifens definiert, wobei das Aspektverhältnis größer als 50 % ist; zwei Seitenwänden (16, 18), die sich von dem Laufstreifen (12) radial nach innen in Richtung der Wulstkerne erstrecken, wobei jede Seitenwand (16, 18) mindestens einen Elastomereinsatz (40a, 40b, 42a, 42b) radial innen in bezug auf eine Lage (30, 32) aufweist,
**dadurch gekennzeichnet, daß** durch eine Kombination aus dem Laufstreifen (12), dem Gürtelverstärkungsaufbau (24, 26) und der mindestens einen mit Kord verstärkten Lage (30, 32) und einem oder mehreren Laufstreifenversteifungselementen, die aus einer Gruppe von einem oder mehreren der folgenden ausgewählt sind:
- (a) mindestens drei oder mehr ringförmige Bänder (29), die in einem Array quer über den Reifen hinweg positioniert und zwischen dem Gürtelverstärkungsaufbau (24, 26) und der Karkasslage (30, 32) angeordnet sind, wobei das Array aus Bändern (29) eine axiale Breite von mindestens 70 Prozent der Laufstreifenbreite aufweist; oder
- (b) eine schraubenförmig gewickelte Wendel (60), die sich quer über und radial innen von dem Gürtelverstärkungsaufbau (24, 26) erstreckt;
die Durchbiegung D₃₀ des Reifens (4, 5) im auf 30 PSI (0,2 MPa) normal aufgepumpten Zustand unter normaler Last kleiner als 20 mm ist, und die Durchbiegung D₀ bei 0 PSI (0 MPa) unter normaler Last kleiner als 40 mm ist, und die Differenz zwischen der Durchbiegung D₃₀ im normal belasteten und aufgepumpten Zustand und der Durchbiegung D₀ im wesentlichen gleich oder kleiner als das Ausmaß der Durchbiegung D₃₀ ist.

2. Reifen nach Anspruch 1, wobei die Bänder (29) aus einem Verbundmaterial, wie beispielsweise Glaspolyamid oder Kohlefaser, bestehen.

3. Reifen nach Anspruch 1, wobei das Array aus Bändern (29) eine axiale Breite von mindestens 80 Prozent der Laufstreifenbreite aufweist.

4. Reifen nach Anspruch 1, wobei der Gürtelverstärkungsaufbau drei Gürtelschichten (24, 25, 26) aufweist, wobei jede Gürtelschicht (24, 25, 26) parallele Korde aufweist, die relativ zur Äquatorialebene des Reifens im Bereich von 18° bis 30° ringförmig orientiert sind, wobei jede benachbarte Schicht (24, 25, 26) entgegengesetzt geneigt ist.

5. Reifen nach Anspruch 4, wobei jede benachbarte Gürtelschicht (24, 25, 26) Kordwinkel aufweist, die gleich aber entgegengesetzt geneigt sind.

6. Reifen nach Anspruch 4, wobei die Korde von einer oder mehreren Gürtelschichten (24, 25, 26) aus Stahl bestehen und einen Durchmesser von 0,035 Zoll (0,09 cm) und einen 2+2-Aufbau aufweisen.

7. Reifen nach Anspruch 4, wobei die Korde von einer oder mehreren Gürtelschichten (24, 25, 26) aus Stahl bestehen und einen Korddurchmesser von 0,056 Zoll (0,14 cm) aufweisen.

8. Reifen nach Anspruch 1, wobei die schraubenförmig gewickelten Wendeln (60) in einem Elastomermaterial (61) eingebettet sind.

9. Reifen nach Anspruch 1, wobei der Kernreiter (38a, 38b) sich ungefähr 2,5 Zoll (6,4 cm) über den Wulstkern erstreckt.

10. Reifen nach Anspruch 1, der, wenn er auf eine Konstruktionsfelge aufgezogen ist, einen dynamischen Laufstreifenkontaktfleck bei 4 km/h mit einer im wesentlichen rechteckigen Form aufweist, die eine Breite Wₘ und eine durchschnittliche Umfangslänge L_{N} besitzt, wie zwischen einer einlaufseitigen Kante und einer auslaufseitigen Kante gemessen, wenn er mit der normalen Fahrzeuglast belastet und normal aufgepumpt ist, und eine Länge Lₙ + ΔL und eine Breite Wₙ, wenn er mit der normalen Fahrzeuglast belastet ist und bei null Fülldruck, wodurch die Parameterform des Kontaktflecks definiert ist, wobei die einlaufseitige Kante einen Laufstreifenelementkontakt im Bereich der Fülldrücke von 0 PSI (0 MPa) bis zu einem normalen Fülldruck aufrechterhält, wobei das Verhältnis der Kontaktflecklänge Lₙ + ΔL bei 0 PSI (0 MPa) zur Länge L_{N} 225 Prozent oder weniger beträgt.

11. Reifen nach Anspruch 10, der eine Nettokontaktfläche aufweist, wenn er normal belastet und aufgepumpt ist, die kleiner als 150 Prozent der Nettokontaktfläche bei normaler Belastung und null PSI (0 MPa) ist.

## Revendications

1. Bandage pneumatique (4, 5) permettant de rouler à plat possédant une bande de roulement externe en direction radiale (12), une structure de renforcement de ceintures (24, 26) à l'intérieur de la bande de roulement en direction radiale, la structure de renforcement de ceintures comportant au moins deux couches (24, 26) renforcées avec des câblés, et une structure de renforcement de carcasses englobant au moins une nappe renforcée avec des câblés (30, 32) s'étendant jusqu'à une paire de tringles de talons annulaires (36a, 36b), le bandage pneumatique, lorsqu'il est monté sur une jante nominale et lorsqu'il est gonflé normalement, mais à l'état non chargé, possède une hauteur de section H et une grosseur du boudin W, dans lequel la grosseur du boudin W est supérieure à la hauteur de section H, le bandage pneumatique possédant une hauteur de section H supérieure à 4 pouces (10 cm) et le rapport de la hauteur de section à la grosseur du boudin H/W définissant le rapport nominal d'aspect du bandage pneumatique, le rapport nominal d'aspect étant supérieur à 50 % ; une paire de flancs (16, 18) s'étendant depuis la bande de roulement (12) en direction radiale vers l'intérieur en se dirigeant vers les tringles de talons, chaque flanc (16, 18) possédant au moins une pièce rapportée élastomère (40a, 40b, 42a, 42b) à l'intérieur d'une nappe (30, 32) en direction radiale, **caractérisé par** une combinaison de la bande de roulement (12), de la structure de renforcement de ceintures (24, 26), de ladite ou desdites nappes renforcées (30, 32) avec des câblés et d'un ou de plusieurs éléments de renforcement de la bande de roulement choisis parmi le groupe comprenant un ou plusieurs des éléments indiqués ci-après :
- (a) au moins trois bandes annulaires (29) ou plus positionnées dans un arrangement latéral à travers le bandage pneumatique en étant intercalées entre la structure de renforcement de ceintures (24, 26) et la nappe de carcasse (30, 32), l'arrangement des bandes (29) possédant une largeur axiale qui représente au moins 70 pour cent de la largeur de bande de roulement; ou
- (b) un ressort hélicoïdal (60) s'étendant en direction axiale à travers et en direction radiale à l'intérieur de la structure de renforcement de ceinture (24, 26);
l'écrasement D₃₀ du bandage pneumatique (4, 5), lorsqu'il est normalement gonflé à une pression de 30 PSI (0,2 MPa) et lorsqu'il est soumis à une charge normale, est inférieur à 20 mm et l'écrasement D₀ du bandage pneumatique (4, 5), à l'état non gonflé sous une pression de 0 PSI (0 MPa) et lorsqu'il est soumis à une charge normale, est inférieur à 40 mm, la différence entre l'écrasement D₃₀ à l'état normalement chargé et normalement gonflé et l'écrasement D₀ est essentiellement égal ou inférieur à la valeur de l'écrasement D₃₀.

2. Bandage pneumatique selon la revendication 1, dans lequel les bandes (29) sont constituées d'une matière composite telle que du verre - polyamide ou des fibres de carbone.

3. Bandage pneumatique selon la revendication 1, dans lequel la largeur axiale de l'arrangement des bandes (29) représente au moins 80 pour cent de la largeur de bande de roulement.

4. Bandage pneumatique selon la revendication 1, dans lequel la structure de renforcement de ceintures possède trois couches de ceintures (24, 25, 26), chaque couche de ceinture (24, 25, 26) comportant des câbles parallèles orientés en direction annulaire par rapport au plan équatorial du bandage pneumatique en formant un angle dans le domaine de 18 ° à 30 °, chaque couche adjacente (24, 25, 26) présentant une inclinaison opposée.

5. Bandage pneumatique selon la revendication 4, dans lequel les angles de câblés de chaque couche de ceinture adjacente (24, 25, 26) sont égaux, mais présentent une inclinaison opposée.

6. Bandage pneumatique selon la revendication 4, dans lequel les câblés d'une ou de plusieurs couches de ceintures (24, 25, 26) sont réalisés en acier et possèdent un diamètre de 0,035 pouce (0,09 cm) et une construction de type 2+2.

7. Bandage pneumatique selon la revendication 4, dans lequel les câblés d'une ou de plusieurs couches de ceintures (24, 25, 26) sont réalisés en acier et possèdent un diamètre de 0,056 pouce (0,14 cm).

8. Bandage pneumatique selon la revendication 1, dans lequel les ressorts hélicoïdaux (60) sont encapsulés dans la matière élastomère (61).

9. Bandage pneumatique selon la revendication 1, dans lequel le bourrage sur tringle (38a, 38b) s'étend à une distance d'environ 2,5 pouces (6,4 cm) au-dessus de la tringle de talon.

10. Bandage pneumatique selon la revendication 1, qui, lorsqu'il est monté sur une jante nominale, possède une surface de contact dynamique de la bande de roulement à 4 km/h de configuration essentiellement rectangulaire possédant une largeur Wₘ et une longueur circonférentielle moyenne Lₙ, telle qu'on la mesure entre le bord avant et le bord arrière lorsque le véhicule est soumis à une charge normale et est gonflé normalement, et une longueur Lₙ + ΔL et une largeur Wₙ lorsque le véhicule est soumis à une charge normale et à une pression de gonflage égale à zéro, définissant les paramètres de configuration de la surface de contact, le bord avant maintenant le contact des éléments de la bande de roulement dans le domaine des pressions de gonflage allant de 0 PSI (0 MPa) à la pression de gonflage normale, dans lequel le rapport de la longueur de la surface de contact Lₙ + ΔL à 0 PSI (0 MPa) à la longueur Lₙ s'élevant à 225 pour cent ou moins.

11. Bandage pneumatique selon la revendication 10, possédant une surface de contact nette à l'état normalement chargé et normalement gonflé qui représente moins de 150 pour cent de la surface de contact nette à l'état normalement chargé et non gonflé sous une pression de zéro PSI (0 MPa).
